# EUROPEAN PATENT SPECIFICATION

(11) **EP 2 940 649 B1**
(45) Date of publication and mention of the grant of the patent: **31.01.2018**
(21) Application number: 13869064.9
(22) Date of filing: 27.12.2013
(51) Int. Cl.: G06Q 50/10, B60L 11/18, G06Q 50/06, H01M 10/44, H01M 10/48, H02J 7/00, B60L 3/00

(54) **CHARGE/DISCHARGE CONTROL DEVICE, SYSTEM, METHOD AND PROGRAM**
VORRICHTUNG, SYSTEM, VERFAHREN UND PROGRAMM ZUR LADE-/ENTLADESTEUERUNG
DISPOSITIF, SYSTÈME, PROCÉDÉ ET PROGRAMME DE COMMANDE DE CHARGE/DÉCHARGE

(30) Priority: 28.12.2012 JP 2012287506
(43) Date of publication of application: 04.11.2015
(73) Proprietor: Mitsubishi Electric Corporation, Tokyo 100-8310 (JP)
(72) Inventor: SUZUKI Shiro, Tokyo 100-8310 (JP); KOMATSU Masayuki, Tokyo 100-8310 (JP); YABE Masaaki, Tokyo 100-8310 (JP); SAKAMOTO Tadaaki, Tokyo 100-8310 (JP)
(74) Representative: Pfenning, Meinig & Partner mbB
(86) International application number: PCT/JP2013/085082
(87) International publication number: WO 2014/104287

(56) References cited:
- WO-A1-2012/099213
- JP-A- 2008 295 136
- JP-A- 2011 155 709
- US-A1- 2011 084 664
- US-A1- 2012 157 083

## Description

### Technical Field

The present disclosure relates to a charge/discharge control device, charge/discharge control system, charge/discharge control method, and program for chargeable/dischargeable secondary batteries.

### Background Art

Hybrid cars running by switching between two power sources, an engine and an electric motor, depending on the driving state and vehicles running only with an electric motor as the power source (hereafter referred to simply as an electric automobile) carry a chargeable/dischargeable battery (secondary battery) for supplying the electric power. The battery is charged by charging facilities established along the roads like gas stations.

In regard to charging the battery with such a charging facility, techniques for preventing the electric energy from being stolen by charging the battery at an unpermitted charging facility have been proposed. For example, the energy supply control device described in Patent Literature 1 permits an energy supply when the current location of the vehicle measured by the positioning means nearly matches the prestored energy supply available location information, thereby preventing the energy from being stolen. US2011084664A1 discloses that a secondary battery and charging system are provided within an electric car or other electric drive vehicle. The secondary battery may, e.g., be owned by the electric utility. The battery is removable and can be charged and discharged independently of the primary car battery system. The utility can use the secondary battery to implement vehicle-to-grid functionality.
WO2012099213 discloses a home power management device with an authentication unit that: acquires identifying information for an electric vehicle containing an on-board rechargeable battery that is connected to a power-conversion device so as to be capable of receiving power therefrom; compares the acquired identifying information with pre-registered identifying information; and uses the results of said comparison to determine whether or not to permit discharging.
US2012157083A1 allows for the utilization of a telematics unit on a telematics-equipped vehicle to prevent the unauthorized discharge of a vehicle battery. A user may communicate an authorization request for allowing discharge of the vehicle battery through a telematics unit or telematics service provider (TSP) call center. If approved by the TSP call enter or telematics unit, an authorization, which may include an authorization code, is communicated to a charge controller which controls the discharge of the vehicle battery. Alternatively, the user may communicate an authorization code directly to the telematics unit which passes it on to the charge controller for approval.

### Citation List

### Patent Literature

Patent Literature 1: Unexamined Japanese Patent Application Kokai Publication No. 2008-295136.

### Summary of Invention

### Technical Problem

However, though the technique described in the Patent Literature 1 can prevent wrongful charging, the usage of the electric energy stored at a permitted charging facility cannot be restricted. Therefore, for example, a worker can wrongfully use the electric energy stored at a free charging station that a company has established for charging commuter vehicles for an electric appliance at his household.

Additionally, like the gas price varying depending on the area, it is much-anticipated that the charge unit price will vary depending on the charging station in the future. When it happens, the electric energy purchased at a charging station of a low charge unit price can be sold at a place with a high charge unit price, making it possible to gain a wrongful profit by reselling the electric energy.

The present disclosure is made under the above circumstance and an objective of the disclosure is to provide a charge/discharge control device, charge/discharge control system, charge/discharge control method, and program making it possible to prevent the wrongful use of electric energy.

### Solution to Problem

In order to achieve the above objective, a charge/discharge control device, a system, a corresponding method and a computer program according to the independent claims are provided. More specifically, the charge/discharge control device according to the present disclosure comprises:
a charging device information acquirer configured to acquire from an electric energy supply source supplying electric energy to a secondary battery charge identification information identifying the electric energy supply source;
a stored electric energy quantity acquirer configured to acquire the electric energy quantity supplied from the electric energy supply source to the secondary battery;
an electric energy accumulation state storage configured to store the charge identification information acquired by the charging device information acquirer in association with the electric energy quantity acquired by the stored electric energy quantity acquirer;
a charge/discharge setting storage configured to store, for each combination of an electric energy supply source and an electric energy supply destination, discharge permission information representing whether the electric energy stored in the secondary battery from the electric energy supply source is dischargeable to the electric energy supply destination;
a discharging device information acquirer configured to acquire from an electric energy supply destination discharge identification information identifying the electric energy supply destination;
a discharge permission determiner configured to determine whether the electric energy supplied from the electric energy supply source identified by the charge identification information stored in the electric energy accumulation state storage is dischargeable to the electric energy supply destination identified by the discharge identification information based on the discharge permission information; and
a discharge controller configured to control the discharge from the secondary battery to the electric energy supply destination identified by the discharge identification information based on the determination result by the discharge permission determiner. When the discharge permission determiner determines that the discharge is possible, the discharge controller identifies from the charging state storage the electric energy quantity associated with the charge identification information identifying the electric energy supply source determined to be dischargeable to the electric energy supply destination identified by the discharge identification information, and controls the discharge to the electric energy supply destination with the identified electric energy quantity set as the upper limit of dischargeable electric energy quantity.

### Advantageous Effects of Invention

The present disclosure can prevent wrongful use of electric energy.

### Brief Description of Drawings

FIG. 1 is a block diagram showing the hardware configuration of the charge/discharge control system according to an embodiment;
FIG. 2 is an illustration showing exemplary data stored in the electric energy accumulation state DB;
FIG. 3 is an illustration showing exemplary data stored in the charge/discharge setting DB;
FIG. 4 is a block diagram showing the functional configuration of the charge/discharge control device according to the embodiment;
FIG. 5 is a flowchart showing an exemplary flow of the charge control procedure;
FIG. 6 is a flowchart showing an exemplary flow of the discharge control procedure;
FIG. 7A is an illustration showing an exemplary bar chart representing the electric energy quantity of each electric energy supply source stored in the electric energy accumulation state DB before discharge; and
FIG. 7B is an illustration showing an exemplary bar chart representing the electric energy quantity of each electric energy supply source stored in the electric energy accumulation state DB after discharge.

### Description of Embodiments

An embodiment of the present disclosure is described hereafter.

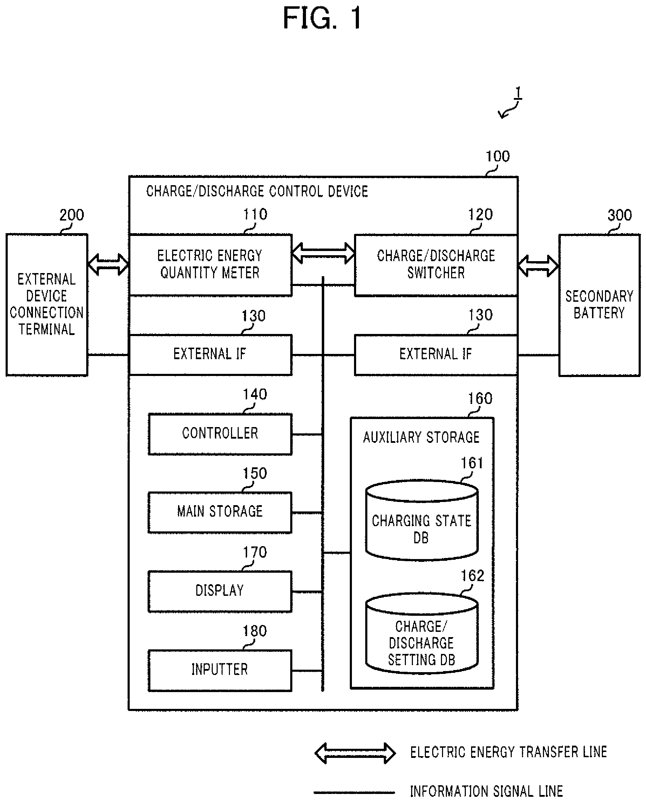

FIG. 1 is a block diagram showing the hardware configuration of a charge/discharge control system 1 according to this embodiment. As shown in FIG. 1, the charge/discharge control system 1 according to this embodiment comprises a charge/discharge control device 100, an external device connection terminal 200, and a secondary battery 300.

The charge/discharge control device 100 is a device controlling the discharge from the secondary battery 300 to an electric energy supply destination connected via the external device connection terminal 200. More specifically, the charge/discharge control device 100 determines whether the electric energy supply destination connected to the external device connection terminal 200 is an electric energy supply destination to which the discharge from the secondary battery 300 is preliminarily permitted, and controls the discharge based on the determination result. The detailed configuration of the charge/discharge control device 100 will be described later.

The external device connection terminal 200 is a terminal for connecting an external device that is an electric energy supply source or an electric energy supply destination and the charge/discharge control system 1. More specifically, the external device connection terminal 200 is connected to an external device that can supply electric energy to the secondary battery 300 as an electric energy supply source such as a charging station established at factories, residences, and gas stations. Furthermore, the external device connection terminal 200 is connected to an external device that can be supplied with electric energy from the secondary battery 300 as an electric energy supply destination such as a home electric appliance and an electric automobile.

Furthermore, the external device connection terminal 200 is connected to the charge/discharge control device 100 via an electric energy transfer line and an information communication line. Then, the external device connection terminal 200 transfers the electric energy from an electric energy supply source to the charge/discharge control device 100 and transfers the electric energy from the secondary battery 300 to an electric energy supply destination via the electric energy transfer line. Furthermore, connected to an external device that is an electric energy supply source or an electric energy supply destination, the external device connection terminal 200 sends identification information identifying the external device to the charge/discharge control device 100 via the information communication line.

The secondary battery 300 is a chargeable/dischargeable battery such as a lithium ion battery. The secondary battery 300 is connected to the charge/discharge control device 100 via an electric energy transfer line and an information communication line. Then, the secondary battery 300 stores the electric energy from an electric energy supply source and discharge the electric energy to an electric energy supply destination via the electric energy transfer line under the control of the charge/discharge control device 100.

The hardware configuration of the charge/discharge control device 100 will be described in detail hereafter. As shown in FIG. 1, the charge/discharge control device 100 according to this embodiment comprises an electric energy quantity meter 110, a charge/discharge switcher 120, external interfaces (IF) 130, a controller 140, a main storage 150, an auxiliary storage 160, a display 170, and an inputter 180.

The electric energy quantity meter 110 measures the electric energy quantity supplied to the secondary battery 300 from an electric energy supply source connected to the external device connection terminal 200 and the electric energy quantity supplied from the secondary battery 300 to an electric energy supply destination connected to the external device connection terminal 200.

The charge/discharge switcher 120 switches the secondary battery 300 between charge and discharge in accordance with control signals from the controller 140.

Each of the external IFs 130 is an interface for making communicable connection to an external device. The charge/discharge control device 100 is connected to the external device connection terminal 200 and secondary battery 300 via the external IFs 130 and acquires information from an external device that is an electric energy supply source or an electric energy supply destination and the secondary battery 300.

The controller 140 comprises, for example, a CPU (central processing unit) and controls the entire charge/discharge control device 100.

The main storage 150 comprises a RAM (random access memory) or the like. The controller 140 loads programs stored in the auxiliary storage 160 onto the main storage 150 and uses the main storage 150 as the work area.

The auxiliary storage 160 comprises a nonvolatile memory such as a flash memory. The auxiliary storage 160 stores programs for the controller 140 to execute the processing of the charge/discharge control device 100. Furthermore, the auxiliary storage 160 supplies data for the programs to the controller 140 and stores data supplied from the controller 140 according to the control of the controller 140.

Furthermore, the auxiliary storage 160 stores a charging state DB 161 and a charge/discharge setting DB 162 as shown in FIG. 1.

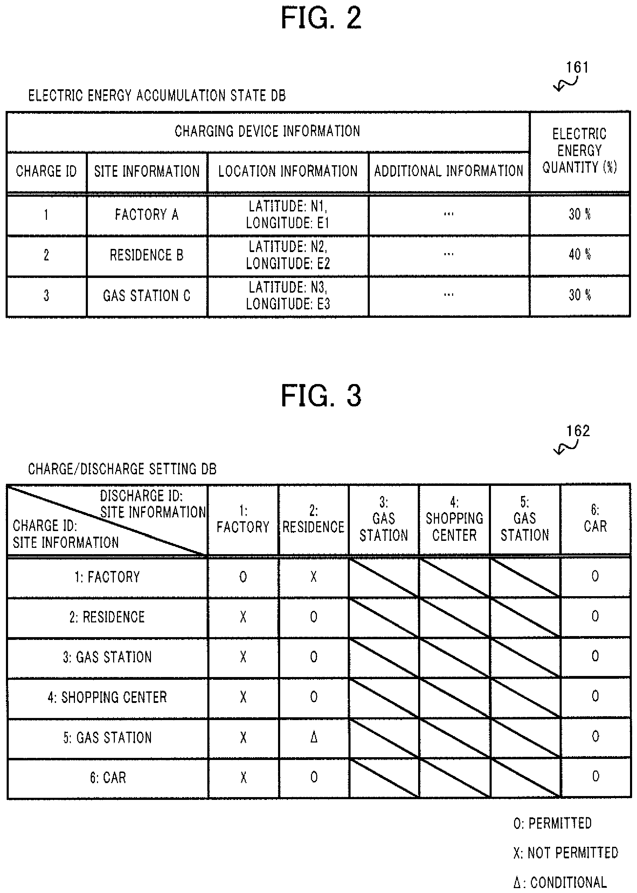

The charging state DB 161 stores information representing electric energy supply sources having supplied electric energy to the secondary battery 300 and the electric energy quantities supplied to the secondary battery 300 by the electric energy supply sources. FIG. 2 shows exemplary data stored in the charging state DB 161. As shown in FIG. 2, the charging state DB 161 stores, for each electric energy supply source having supplied electric energy to the secondary battery 300, "CHARGING DEVICE INFORMATION" and an "ELECTRIC ENERGY QUANTITY" representing the electric energy quantity supplied from the electric energy supply source to the secondary battery 300.

Furthermore, the charging device information includes "charge identification information (CHARGE ID)," "SITE INFORMATION," "LOCATION INFORMATION," and "ADDITIONAL INFORMATION." The charge identification information is information identifying the electric energy supply source. The site information represents the type of the site where the electric energy supply source represented by the charge identification information is located such as "FACTORY," "RESIDENCE," "GAS STATION," "SHOPPING CENTER," "GAS STATION," and "CAR." The location information is information representing the location of the electric energy supply source and represents the location of an electric energy supply source using, for example, the latitude and longitude. The additional information is various kinds of information regarding the electric energy supply source such as information regarding the charge unit price or discharge unit price and the type, charge capacity, mileage, and other information of an electric automobile.

In the charging state DB 161 shown in FIG. 2, the "ELECTRIC ENERGY QUANTITY" represents the electric energy quantity with 100 % representing the electric energy quantity when the secondary battery 300 is fully charged. For example, the electric energy quantity supplied from an electric energy supply source of which the charge identification information is "1" and the site information is "FACTORY" is 30 %. Furthermore, in the charging state DB 161 shown in FIG. 2, the total electric energy quantity supplied from the electric energy supply sources is 100 %; thus, the secondary battery 300 is fully charged.

The charging device information stored in the charging state DB 161 is acquired from, for example, an external device that is an electric energy supply source via the external device connection terminal 200. Furthermore, the information representing the electric energy quantity stored in the charging state DB 161 is acquired from the electric energy quantity meter 110.

The charge/discharge setting DB 162 stores, for each combination of an electric energy supply source and an electric energy supply destination, discharge permission information representing whether the electric energy stored in the secondary battery 300 from the electric energy supply source is dischargeable to the electric energy supply destination. FIG. 3 shows exemplary data stored in the charge/discharge setting DB 162. As shown in FIG. 3, the charge/discharge setting DB 162 stores discharge permission information for each combination of "charge identification information (CHARGE ID): SITE INFORMATION" identifying an electric energy supply source and "discharge identification information (DISCHARGE ID): SITE INFORMATION" identifying an electric energy supply destination.

In the discharge permission information shown in FIG. 3, the symbol "○" indicates that discharge is permitted and the symbol "x" indicates that discharge is not permitted. For example, the discharge permission information corresponding to the combination of the site information "FACTORY" of which the charge identification information is "1" and the site information "FACTORY" of which the discharge identification information is "1" is "○." In other words, the electric energy stored in the secondary battery 300 at a factory is permitted to be discharged at a factory. Furthermore, for example, the discharge permission information corresponding to the combination of the site information "FACTORY" of which the charge identification information is "1" and the site information "RESIDENCE" of which the discharge identification information is "2" is "x." In other words, the electric energy stored in the secondary battery 300 at a factory is not permitted to be discharged at a residence.

Furthermore, in the discharge permission information shown in FIG. 3, the symbol "Δ" indicates that discharge is permitted when a dischargeable condition is satisfied. The dischargeable condition is, for example, that the electric energy supply source and electric energy supply destination are located in areas of which the electric energy unit prices are equal. With the discharge being permitted when such a condition is satisfied, an illegal act of charging from an electric energy supply source established in a low electric energy unit price area and discharging to an electric energy supply destination established in a high electric energy unit price area to gain a profit can be prevented. For example, the discharge permission information corresponding to the combination of the site information "GAS STATION" of which the charge identification information is "5" and the site information "RESIDENCE" of which the charge identification information is "2" is "Δ." In other words, the electric energy stored in the secondary battery 300 at a gas station is permitted to be discharged at a residence provided that the gas station and residence are located in areas of which the electric energy unit prices are equal.

Returning to FIG. 1, the display 170 comprises a display device such as a liquid crystal display and displays various kinds of information output from the controller 140. More specifically, the display 170 displays messages indicating that charge or discharge is unavailable or charge or discharge is completed.

The inputter 180 comprises an input device such as a keyboard and buttons for the user to operate the charge/discharge control device 100, and receives various kinds of information entered by the user. More specifically, the inputter 180 receives from the user operation input representing the commands to start and end the charge control procedure and discharge control procedure, which will be described later.

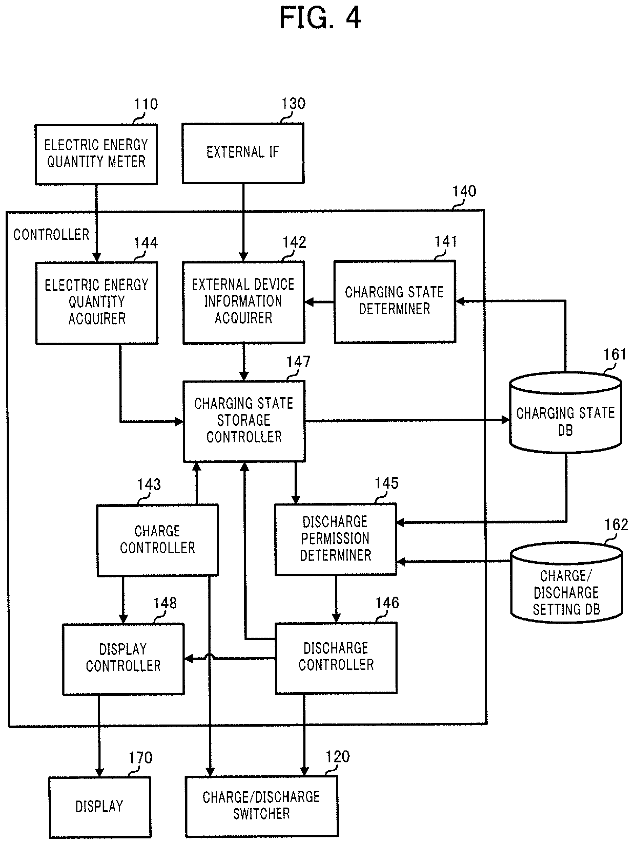

The functional configuration of the controller 140 of the charge/discharge control device 100 is described hereafter. FIG. 4 shows a block diagram representing the functional configuration of the controller 140 of the charge/discharge control device 100. As shown in FIG. 4, the controller 140 functions as an charging state determiner 141, an external device information acquirer 142, a charge controller 143, an electric energy quantity acquirer 144, a discharge permission determiner 145, a discharge controller 146, an charging state storage controller 147, and a display controller 148.

The charging state determiner 141 determines whether a charging state of the secondary battery 300 is in a chargeable or dischargeable state based on the electric energy quantities stored in the charging state DB 161.

More specifically, for charging the secondary battery 300, the charging state determiner 141 determines whether the charging state of the secondary battery 300 is fully charged state, in other words whether the total of electric energy quantities from each of the electric energy supply sources stored in the charging state DB 161 shown in FIG. 2 is 100 %. Then, if the total electric energy quantity is lower than 100 %, the charging state determiner 141 determines that the charging state of the secondary battery 300 is not fully charged state, in other words is a chargeable state. On the other hand, if the total electric energy quantity is 100 %, the charging state determiner 141 determines that the charging state of the secondary battery 300 is fully charged state, in other words is not a chargeable state.

Furthermore, more specifically, for discharging the secondary battery 300, the charging state determiner 141 determines whether the charging state of the secondary battery 300 is a dischargeable state, in other words the total of electric energy quantities from each of the electric energy supply sources stored in the charging state DB 161 shown in FIG. 2 is lower than a dischargeable threshold. Then, if the total electric energy quantity is greater than the threshold, the charging state determiner 141 determines that the charging state of the secondary battery 300 is a dischargeable state. On the other hand, if the total electric energy quantity is lower than the threshold, the charging state determiner 141 determines that the charging state of the secondary battery 300 is not in a dischargeable state.

The external device information acquirer 142 acquires charging device information from the electric energy supply source connected to the external device connection terminal 200 via the external IF 130. The charging device information includes charge identification information identifying the electric energy supply source, site information representing the type of the site where the electric energy supply source is established, location information representing the location of the electric energy supply source, and additional information. Furthermore, the external device information acquirer 142 acquires discharging device information identifying the electric energy supply destination from the electric energy supply destination connected to the external device connection terminal 200 via the external IF 130. The discharging device information includes discharge identification information identifying the electric energy supply destination, site information representing the type of the site where the electric energy supply destination is established, location information representing the location of the electric energy supply destination, and additional information.

The charge controller 143 controls the charge/discharge switcher 120 so as to control charging to the secondary battery 300.

The electric energy quantity acquirer 144 acquires from the electric energy quantity meter 110 the electric energy quantity stored in the secondary battery 300 from the start to end of charging by the charge controller 143 and the electric energy quantity discharged from the secondary battery 300 from the start to end of discharging by the discharge controller 146.

The discharge permission determiner 145 determines whether the electric energy supplied from the electric energy supply source identified by the charge identification information stored in the charging state DB 161 is dischargeable to the electric energy supply destination identified by the discharge identification information based on the discharge permission information stored in the charge/discharge setting DB 162.

The discharge controller 146 controls the discharge from the secondary battery 300 by controlling the charge/discharge switcher 120 based on the determination result of the discharge permission determiner 145.

When the charge controller 143 charges the secondary battery 300, the charging state storage controller 147 associates and stores in the charging state DB 161 the charge identification information of the electric energy supply source and the stored electric energy quantity. Furthermore, when the discharge controller 146 discharges the secondary battery 300, the charging state storage controller 147 subtracts the discharged electric energy quantity from the electric energy quantity of the electric energy supply source permitted by the discharge permission determiner 145, stored in the charging state DB 161 to update the electric energy quantity stored in the charging state DB 161.

The display controller 148 controls the display on the display 170. More specifically, the display controller 148 displays on the display 170 messages indicating that charge or discharge is unavailable or charge or discharge is completed.

The processing flow of the procedures executed by the charge/discharge control device 100 is described hereafter.

First, the charge control procedure executed by the charge/discharge control device 100 will be described.

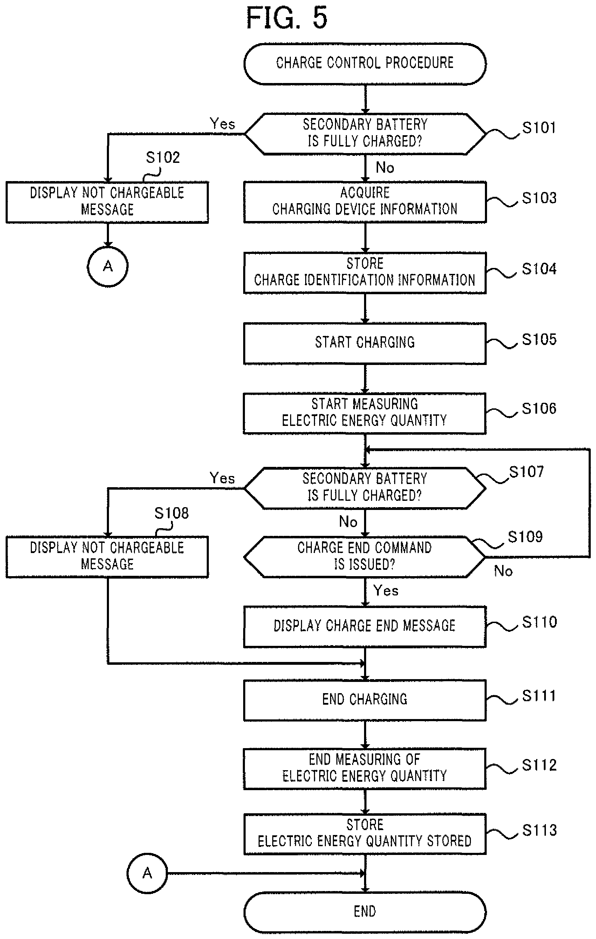

FIG. 5 is a flowchart showing an exemplary flow of the charge control procedure executed by the charge/discharge control device 100. For example, triggered by reception of operation input representing a start of charging from the user via the inputter 180, the charge control procedure shown in FIG. 5 starts.

First, the charging state determiner 141 determines whether the charging state of the secondary battery 300 is fully charged state (Step S101). More specifically, the charging state determiner 141 determines whether the total of electric energy quantities of each of the electric energy supply sources stored in the charging state DB 161 is equal to the electric energy quantity when the secondary battery 300 is fully charged.

If the charging state determiner 141 determines that the secondary battery 300 is fully charged (Step S101; Yes), the display controller 148 displays on the display 170 a massage indicating that the secondary battery 300 is fully charged and thus not chargeable (Step S102). Then, the charge control procedure ends.

If the charging state determiner 141 determines that the secondary battery 300 is not fully charged (Step S101; No), the external device information acquirer 142 acquires charging device information from the electric energy supply source connected to external device connection terminal 200 via the external IF 130 (Step S103).

Then, the charging state storage controller 147 stores the charging device information acquired in the Step S103 in the charging state DB 161 (Step S104).

Then, the charge controller 143 controls the charge/discharge switcher 120 to start charging the secondary battery 300 from the electric energy supply source (Step S105).

Furthermore, the electric energy quantity acquirer 144 starts measuring the electric energy quantity with the electric energy quantity meter 110 (Step S106).

Then, the charge controller 143 determines whether the charging state of the secondary battery 300 is fully charged state (Step S107).

If the charge controller 143 determines that the charging state of the secondary battery 300 is fully charged state (Step S107; Yes), the display controller 148 displays on the display 170 a massage indicating that the secondary battery 300 is in fully charged state and thus no longer chargeable (Step S108). Then, the processing proceeds to Step S111.

If the charging state of the secondary battery 300 is not fully charged state (Step S107; No), the charge controller 143 determines whether a charge end command is issued by the user via the inputter 180 (Step S109). If the charge end command is not issued (Step S109; No), the charge controller 143 returns to the Step S107 and continues the charging.

If a charge end command is issued (Step S109; Yes), the display controller 148 display on the display 170 a message indicating that the charging will end (Step S110).

Then, the charge controller 143 controls the charge/discharge switcher 120 to end the charging (Step S111). Furthermore, the electric energy quantity acquirer 144 ends the measuring of the electric energy quantity with the electric energy quantity meter 110 (Step S112).

Then, the charging state storage controller 147 stores in the charging state DB 161 the electric energy quantity stored in the secondary battery 300 and acquired by the electric energy quantity acquirer 144 in association with the charging device information stored in the Step S105 (Step S113). Then, the charge control procedure ends.

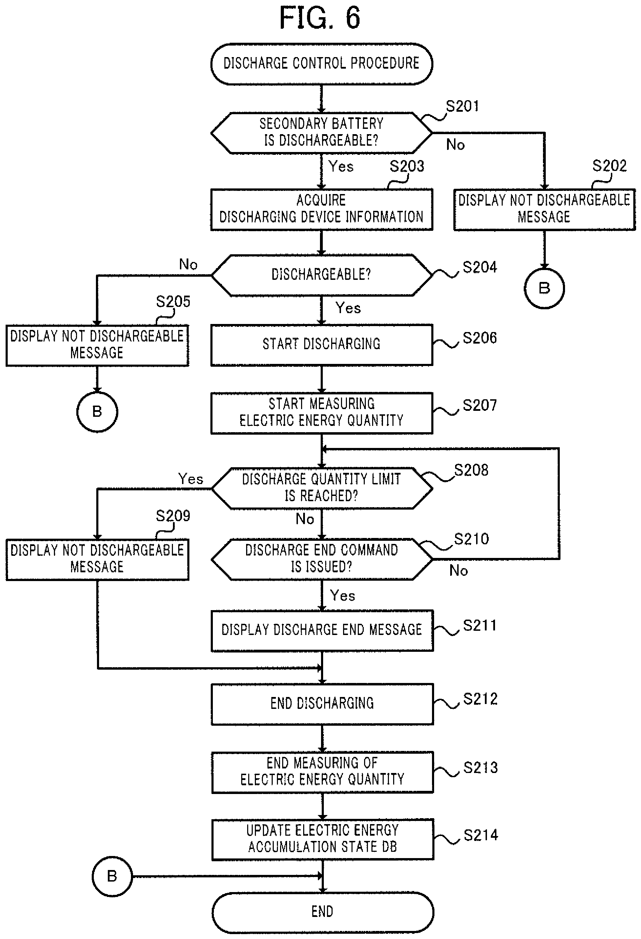

The discharge control procedure executed by the charge/discharge control device 100 is described hereafter. FIG. 6 is a flowchart showing an exemplary flow of the discharge control procedure executed by the charge/discharge control device 100. For example, triggered by reception of operation input representing a start of discharging from the user via the inputter 180, the discharge control procedure shown in FIG. 6 starts.

First, the charging state determiner 141 determines whether the charging state of the secondary battery 300 is a dischargeable state (Step S201). More specifically, the charging state determiner 141 determines whether the total of electric energy quantities from each of the electric energy supply sources stored in the charging state DB 161 is greater than a dischargeable threshold.

If the charging state determiner 141 determines that the charging state of the secondary battery 300 is not a dischargeable state (Step S201; No), the display controller 148 displays on the display 170 a message indicating that discharge is not available (Step S202). Then, the discharge control procedure ends.

If the charging state determiner 141 determines that the charging state of the secondary battery 300 is a dischargeable state (Step S201; Yes), the external device information acquirer 142 acquires discharging device information from the electric energy supply destination connected to the external device connection terminal 200 via the external IF 130 (Step S203).

Then, the discharge permission determiner 145 determines whether it is dischargeable to the electric energy supply destination connected to the external device connection terminal 200 based on the discharging device information acquired in the Step S203, the charging state DB 161, and the charge/discharge setting DB 162 (Step S204).

For example, it is assumed that the discharge identification information included in the discharging device information acquired in the Step S203 is "1," in other words the external device connection terminal 200 is connected to a device that is an electric energy supply destination established in a "FACTORY." In such a case, the discharge permission determiner 145 makes reference to the charge/discharge setting DB 162 and identifies the charge identification information "1" associated with the discharge identification information "1" with the discharge permission information "○." Then, the discharge permission determiner 145 makes reference to the charging state DB 161 and determines whether the identified charge identification information "1" is stored. If the identified charge identification information "1" is stored in the charging state DB 161, the discharge permission determiner 145 determines that the discharge is possible. On the other hand, if the identified charge identification information "1" is not stored in the charging state DB 161, the discharge permission determiner 145 determines that the discharge is not possible.

Furthermore, for example, it is assumed that the discharge identification information included in the discharging device information acquired in the Step S203 is "2," in other words the external device connection terminal 200 is connected to a device that is an electric energy supply destination established in a "RESIDENCE." In such a case, the discharge permission determiner 145 makes reference to the charge/discharge setting DB 162 and identifies the charge identification information "2" to "4" and "6" associated with the discharge identification information "2" with the discharge permission information "○" and the charge identification information "5" associated with the discharge identification information "2" with the discharge permission information "Δ." Then, the discharge permission determiner 145 makes reference to the charging state DB 161 and determines whether the identified charge identification information "2" to "6" is stored. Here, if the identified charge identification information "5" is stored in the charging state DB 161, the discharge permission determiner 145 determines whether the electric energy supply source and electric energy supply destination are located in areas of which the electric energy unit prices are equal, based on the location information corresponding to the identified charge identification information "5" and the location information included in the discharging device information acquired in the Step S203. If the identified charge identification information "2" to "4" and "6" is stored in the charging state DB 161 or if the electric energy supply source and electric energy supply destination are located in areas of which the electric energy unit prices are equal, the discharge permission determiner 145 determines that the discharge is possible. On the other hand, if the identified charge identification information "2" to "4" and "6" is not stored in the charging state DB 161 or if the identified charge identification information "5" is stored in the charging state DB 161 but the electric energy supply source and electric energy supply destination are not located in areas of which the electric energy unit prices are equal, the discharge permission determiner 145 determines that the discharge is not possible.

If the discharge permission determiner 145 determines that the discharge is not possible (Step S204; No), the display controller 148 displays on the display 170 a massage indicating that the discharge is impossible because of an improper electric energy supply destination (Step S205).

If the discharge permission determiner 145 determines that the discharge is possible (Step S204; Yes), the discharge controller 146 controls the charge/discharge switcher 120 to start discharging (Step S206). Furthermore, the discharge controller 146 acquires from the charging state DB 161 the electric energy quantity corresponding to the charge identification information associated with the discharge identification information for which the discharge is determined to be possible based on the discharge permission information, and sets the electric energy quantity as the discharge quantity limit.

When there is multiple pieces of charge identification information associated with the discharge identification information for which the discharge is determined to be possible based on the discharge permission information, the discharge controller 146 can acquire from the charging state DB161 the electric energy quantity corresponding to each piece of charge identification information and set the total of acquired electric energy quantities as the discharge quantity limit.

Furthermore, the electric energy quantity acquirer 144 starts measuring the electric energy quantity with the electric energy quantity meter 110 (Step S207).

Then, the discharge controller 146 determines whether the discharged electric energy quantity has reached the discharge quantity limit (Step S208).

If the discharge controller 146 determines that the discharged electric energy quantity has reached the discharge quantity limit (Step S208; Yes), the display controller 148 displays on the display 170 a massage indicating that the discharged electric energy quantity has reached the discharge quantity limit and thus no more discharge is available (Step S209). Then, the processing proceeds to Step S212.

If the discharged electric energy quantity has not reached the discharge quantity limit (Step S208; No), the discharge controller 146 determines whether a discharge end command is issued by the user via the inputter 180 (Step S210). If the discharge end command is not issued (Step S210; No), the discharge controller 146 returns the processing to the Step S208 and continues the discharging.

If a discharge end command is issued (Step S210; Yes), the display controller 148 displays on the display 170 a message indicating that the discharging will end (Step S211).

Then, the discharge controller 146 controls the charge/discharge switcher 120 to end the discharging (Step S212). Furthermore, the electric energy quantity acquirer 144 ends the measuring of the electric energy quantity with the electric energy quantity meter 110 (Step S213).

Then, the charging state storage controller 147 subtracts the discharged electric energy quantity from the electric energy quantity of the electric energy supply source permitted by the discharge permission determiner 145, stored in the charging state DB 161 to update the electric energy quantity stored in the charging state DB 161 (Step S214). Then, the discharge control procedure ends.

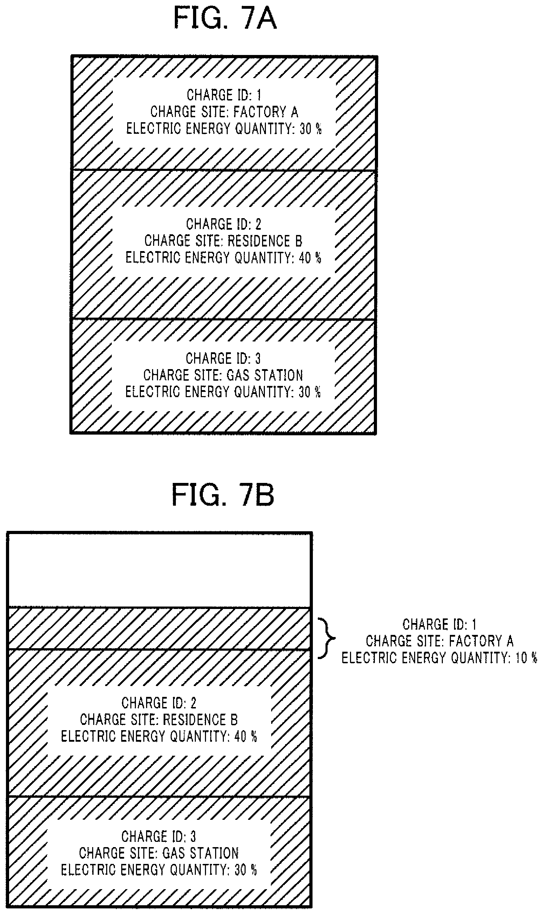

Updating of the electric energy quantities stored in the charging state DB 161 is described hereafter. FIG. 7A shows an exemplary bar chart representing the electric energy quantities of electric energy supply sources stored in the charging state DB 161 before they are discharged. In the example shown in FIG. 7A, the electric energy quantities supplied from the electric energy supply sources identified by the charge identification information "1," "2," and "3" are "30 %," "40%," and "30%," respectively, and the charging state of the secondary battery 300 is fully charged state.

Then, if the discharge identification information acquired in the Step S203 is "1," the discharge permission determiner 145 makes reference to the charge/discharge setting DB 162 and identifies the charge identification information "1" associated with the discharge identification information "1" with the discharge permission information "○." Then, the discharge permission determiner 145 makes reference to the charging state DB 161 and finds that the identified charge identification information "1" is stored in the charging state DB 161, whereby the discharge permission determiner 145 determines that the discharge is possible.

Then, it is assumed that the discharge controller 146 starts discharging and the user stops the discharging when the discharged electric energy quantity is 20 %. In such a case, the charging state storage controller 147 makes reference to the charging state DB 161 and subtracts the discharged electric energy quantity "20%" from the electric energy quantity "30%" corresponding the electric energy supply source determined to be dischargeable by the discharge permission determiner 145, namely the charge identification information "1" to update the electric energy quantity corresponding to the charge identification information "1" to "10%." FIG. 7B shows an exemplary bar chart presenting the electric energy quantities of electric energy supply sources stored in the charging state DB 161 after discharge. As shown in FIG. 7B, the charging state of the secondary battery 300 is the state of being discharged by 20 % from the fully charged state shown in FIG. 7A. The discharged electric energy quantity of 20 % is subtracted from the electric energy quantity "30 %" corresponding to the charge identification information "1" that is an electric energy supply source for which the discharge is determined to be possible by the discharge permission determiner 145, and the electric energy quantity corresponding to the charge identification information "1" is updated to "10 %" after the discharging.

When there are multiple pieces of charge identification information associated with the discharge identification information for which the discharge is determined to be possible based on the discharge permission information and the discharge is completed before reaching the discharge quantity limit, the charging state storage controller 147 can subtract the discharged electric energy quantity from the electric energy quantities of the electric energy supply sources permitted by the discharge permission determiner 145, stored in the charging state DB 161 in a predetermined priority order to update the electric energy quantities stored in the charging state DB 161.

As described above, in the charge/discharge control system 1 according to this embodiment, the charging state DB 161 stores, for each electric energy supply source, the electric energy quantity stored from the electric energy supply source. Furthermore, the charge/discharge setting DB 162 stores discharge permission information representing an electric energy supply source and an electric energy supply destination to which the electric energy stored in the secondary battery 300 from the electric energy supply source is dischargeable. Then, for discharging to an electric energy supply destination, it is determined whether any electric energy from an electric energy supply source dischargeable to the electric energy supply destination is stored in the secondary battery 300, and the discharge is controlled based on the determination result. Consequently, it is possible to determine whether to discharge electric energy stored in the secondary battery 300 according to the electric energy supply source and the electric energy supply destination of the electric energy, thereby it is possible to prevent from wrongful use of electric energy.

Furthermore, when the discharge is determined to be possible, the electric energy quantity stored from an electric energy supply source dischargeable to the electric energy supply destination is set as the upper limit of electric energy dischargeable to the electric energy supply destination (the discharge quantity limit), whereby the amount of use of electric energy can be restricted.

Furthermore, the discharge permission information can indicate that the discharge is permitted when a dischargeable condition is satisfied, more specifically when an electric energy supply source and an electric energy supply destination are established in areas of which the electric energy unit prices are equal. With the discharge being permitted when such a condition is satisfied, an illegal act of charging at an electric energy supply source established in a low electric energy unit price area and discharging to an electric energy supply destination established in a high electric energy unit price area to gain a profit can be prevented.

An embodiment of the present disclosure is described above. The present invention is not restricted to the above embodiment.

Furthermore, the charge/discharge control device 100 according to the present disclosure can be realized by a conventional computer system, not by a dedicated system. For example, the charge/discharge control device 100 executing the above-described procedures can be configured by distributing to a computer connected to a network the program for executing the above operation stored on a computer system-readable non-transitory recording medium (CD-ROM, MO, and the like) and installing the program onto the computer system.

Furthermore, the program can be provided to the computer by any method. For example, the program can be uploaded on a bulletin board (BBS) on a communication line and distributed to a computer via the communication line. Alternatively, the program can be transferred by a modulated wave created by modulating a carrier wave with signals representing the program and a device receiving the modulated wave demodulates the modulated wave to restore the program. Then, the computer activates and executes the program under the control of an OS like other application programs. Consequently, the computer functions as the charge/discharge control device 100 executing the above-described procedures.

Various embodiments and modifications are available to the present disclosure without departing from the scope of the present disclosure. The above-described embodiment is given for explaining the present disclosure and do not confine the scope of the present disclosure. In other words, the scope of the present disclosure is set forth by the scope of claims, not by the above-described embodiment. Various modifications made within the scope of claims and scope of significance of the invention equivalent thereto are considered to fall under the scope of the present disclosure.

The present application is based on Japanese Patent Application No. 2012-287506, filed on December 28, 2012,

### Industrial Applicability

The present disclosure is suitable for chargeable/dischargeable secondary battery control systems.

### Reference Signs List

- 1: Charge/discharge control system
- 100: Charge/discharge control device
- 110: Electric energy quantity meter
- 120: Charge/discharge switcher
- 130: External IF
- 140: Controller
- 141: Charging state determiner
- 142: External device information acquirer
- 143: Charge controller
- 144: Electric energy quantity acquirer
- 145: Discharge permission determiner
- 146: Discharge controller
- 147: Charging state storage controller
- 148: Display controller
- 150: Main storage
- 160: Auxiliary storage
- 161: Charging state DB
- 162: Charge/discharge setting DB
- 170: Display
- 180: Inputter
- 200: External device connection terminal
- 300: Secondary battery

## Claims

1. A charge/discharge control device (100), comprising:
a first acquirer (142) configured to acquire from an electric energy supply source supplying electric energy to a secondary battery charge identification information identifying the electric energy supply source;
a second acquirer (144) configured to acquire the electric energy quantity supplied from the electric energy supply source to the secondary battery;
a first storage (161) configured to store the charge identification information acquired by the first acquirer (142) in association with the electric energy quantity acquired by the second acquirer (144);
a second storage (162) configured to store, for each combination of an electric energy supply source and an electric energy supply destination, discharge permission information representing whether the electric energy stored in the secondary battery from the electric energy supply source is dischargeable to the electric energy supply destination;
a third acquirer (142) configured to acquire from an electric energy supply destination discharge identification information identifying the electric energy supply destination;
a determiner (145) configured to determine whether the electric energy supplied from the electric energy supply source identified by the charge identification information stored in the first storage (161) is dischargeable to the electric energy supply destination identified by the discharge identification information based on the discharge permission information; and
a controller (146) configured to control the discharge from the secondary battery to the electric energy supply destination identified by the discharge identification information based on the determination result by the determiner (145),
wherein the control device is configured such that, when the determiner (145) determines that the discharge is possible, the controller (146) identifies from the first storage (161) the electric energy quantity associated with the charge identification information identifying the electric energy supply source determined to be dischargeable to the electric energy supply destination identified by the discharge identification information, and controls the discharge to the electric energy supply destination with the identified electric energy quantity set as the upper limit of dischargeable electric energy quantity.

2. The charge/discharge control device (100) according to claim 1, **characterized in that**
the first acquirer (142) is further adapted to acquire from an electric energy supply source charging location information representing the location of the electric energy supply source,
the first storage (161) is configured to store the charge identification information and charging location information acquired by the first acquirer (142) in association with the electric energy quantity acquired by the second acquirer (144),
the discharge permission information indicates that the electric energy stored in the secondary battery from an electric energy supply source is dischargeable to an electric energy supply destination when the location of the electric energy supply source and the location of the electric energy supply destination satisfy a predetermined condition,
the third acquirer (142) is further adapted to acquire from an electric energy supply destination discharging location information representing the location of the electric energy supply destination, and
the determiner (145) is adapted to permit discharge of the electric energy supplied from the electric energy supply source identified by the charge identification information corresponding to the charging location information to the electric energy supply destination identified by the discharge identification information when the location represented by the discharging location information and the location represented by the charging location information stored in the first storage (161) satisfy the condition based on the discharge permission information.

3. The charge/discharge control device (100) according to claim 1 or 2, **characterized in that**
the electric energy supply source comprises at least one of a public facility, a residence, a factory, a company and a car.

4. A charge/discharge control system (1) including a secondary battery and a charge/discharge control device according to any one of the preceding claims.

5. A charge/discharge control method, comprising:
a first acquisition step (142) of acquiring from an electric energy supply source supplying electric energy to a secondary battery charge identification information identifying the electric energy supply source;
a second acquisition step (144) of acquiring the electric energy quantity supplied from the electric energy supply source to the secondary battery;
a first storing step (147) of associating and storing in an first storage (161) the charge identification information acquired in the first acquisition step (142) and the electric energy quantity acquired in the second acquisition step (144);
a third acquisition step (142) of acquiring from an electric energy supply destination discharge identification information identifying the electric energy supply destination;
a determining step (145) of determining whether the electric energy supplied from the electric energy supply source identified by the charge identification information stored in the first storage (161) is dischargeable to the electric energy supply destination identified by the discharge identification information based on discharge permission information stored in a second storage (162) for each combination of an electric energy supply source and an electric energy supply destination and representing whether the electric energy stored in the secondary battery from the electric energy supply source is dischargeable to the electric energy supply destination; and
a control step (146) of controlling the discharge from the secondary battery to the electric energy supply destination identified by the discharge identification information based on the determination result in the determination step (145),
wherein when the discharge is possible in the determining step (145), the electric energy quantity associated with the charge identification information identifying the electric energy supply source determined to be dischargeable to the electric energy supply destination identified by the discharge identification information is identified from the first storage (161), and the discharge to the electric energy supply destination is controlled with the identified electric energy quantity set as the upper limit of dischargeable electric energy quantity in the control step (146).

6. A program allowing a computer to function as:
first acquiring means (142) for acquiring from an electric energy supply source supplying electric energy to a secondary battery charge identification information identifying the electric energy supply source;
second acquiring means (144) for acquiring the electric energy quantity supplied from the electric energy supply source to the secondary battery;
first storing means (161) for storing the charge identification information acquired by the first acquiring means (142) in association with the electric energy quantity acquired by the second acquiring means (144);
second storing means (162) for storing, for each combination of an electric energy supply source and an electric energy supply destination, discharge permission information representing whether the electric energy stored in the secondary battery from the electric energy supply source is dischargeable to the electric energy supply destination;
third acquiring means (142) for acquiring from an electric energy supply destination discharge identification information identifying the electric energy supply destination;
determining means (145) for determining whether the electric energy supplied from the electric energy supply source identified by the charge identification information stored in the first storing means (161) is dischargeable to the electric energy supply destination identified by the discharge identification information based on the discharge permission information; and
controlling means (146) for controlling the discharge from the secondary battery to the electric energy supply destination identified by the discharge identification information based on the determination result by the determining means (145),
wherein when the determining means (145) determines that the discharge is possible, the controlling means (146) identifies from the first storage (161) the electric energy quantity associated with the charge identification information identifying the electric energy supply source determined to be dischargeable to the electric energy supply destination identified by the discharge identification information, and controls the discharge to the electric energy supply destination with the identified electric energy quantity set as the upper limit of dischargeable electric energy quantity.

## Patentansprüche

1. Ladungs-/Entladungssteuervorrichtung (100), umfassend:
einen ersten Erwerber (142), der eingerichtet ist, von einer Elektroenergieversorgungsquelle, die elektrische Energie an eine Sekundärbatterie zuführt, Ladungsidentifikationsinformation, die die Elektroenergieversorgungsquelle identifiziert, zu erwerben;
einen zweiten Erwerber (144), der eingerichtet ist, die Menge der von der Elektroenergieversorgungsquelle an die Sekundärbatterie zugeführten elektrischen Energie zu erwerben;
einen ersten Speicher (161), der eingerichtet ist, die durch den ersten Erwerber (142) erworbenen Ladungsidentifikationsinformation in Verbindung mit der durch den zweiten Erwerber (144) erworbenen elektrischen Energiemenge zu speichern;
einen zweiten Speicher (162), der eingerichtet ist, für jede Kombination einer Elektroenergieversorgungsquelle und eines Elektroenergieversorgungsziels Entladungszulassungsinformation zu speichern, die repräsentiert, ob die in der Sekundärbatterie gespeicherte elektrische Energie von der Elektroenergieversorgungsquelle an das Elektroenergieversorgungsziel entladbar ist;
einen dritten Erwerber (142), der eingerichtet ist, von einem Elektroenergieversorgungsziel Entladungsidentifikationsinformation zu erwerben, die das Elektroenergieversorgungsziel identifiziert;
einen Bestimmer (145), der eingerichtet ist, zu bestimmen, ob die von der Elektroenergieversorgungsquelle, die durch die im ersten Speicher (161) gespeicherten Ladungsidentifikationsinformationen identifiziert wird, zur Verfügung gestellte elektrische Energie an das Elektroenergieversorgungsziel, das durch die Entladungsidentifikationsinformation identifiziert wird, entladbar ist auf Grundlage der Entladungszulassungsinformationen; und
eine Steuerung (146), die eingerichtet ist, die Entladung von der Sekundärbatterie an das Elektroenergieversorgungsziel, das durch die Entladungsidentifikationsinformation identifiziert wird, auf Grundlage des Bestimmungsergebnisses des Bestimmers (145) zu steuern,
wobei die Steuervorrichtung so eingerichtet ist, dass
wenn der Bestimmer (145) bestimmt, dass die Entladung möglich ist, die Steuerung (146) aus dem ersten Speicher (161) die elektrische Energiemenge identifiziert, die mit der Ladungsidentifikationsinformation assoziiert ist, die die Elektroenergieversorgungsquelle identifiziert, für die bestimmt wurde, dass sie an das durch die Entladungsidentifikationsinformation identifizierte Elektroenergieversorgungsziel entladbar ist und die Entladung an das Elektroenergieversorgungsziel mit der identifizierten elektrischen Energiemenge, die als die Obergrenze der entladbaren elektrischen Energiemenge eingestellt ist, steuert.

2. Ladungs-/Entladungssteuervorrichtung (100) nach Anspruch 1, **dadurch gekennzeichnet, dass**
der erste Erwerber (142) ferner ausgelegt ist, von einer Elektroenergieversorgungsquelle Ladungspositionsinformation, die die Position der Elektroenergieversorgungsquelle repräsentiert, zu erwerben,
der erste Speicher (161) eingerichtet ist, die Ladungsidentifikationsinformation und Ladungspositionsinformation, die durch den ersten Erwerber (142) erworben wurden, in Verbindung mit der durch den zweiten Erwerber (144) erworbenen Menge an elektrischer Energiemenge zu speichern,
die Entladungszulassungsinformation anzeigt, dass die in der Sekundärbatterie gespeicherte elektrische Energie von einer Elektroenergieversorgungsquelle an ein Elektroenergieversorgungsziel entladbar ist, wenn die Position der Elektroenergieversorgungsquelle und die Position des Elektroenergieversorgungsziels einer vorherbestimmten Bedingung genügen,
der dritte Erwerber (142) ferner ausgelegt ist, von einem Elektroenergieversorgungsziel Entladungspositionsinformation, die die Position des Elektroenergieversorgungsziels repräsentiert, zu erwerben, und
der Bestimmer (145) ausgelegt ist, Entladung der elektrischen Energie, die von der durch die Ladungsidentifikationsinformationen identifizierten Elektroenergieversorgungsquelle entsprechend der Ladungspositionsinformation bereitgestellt wird, an das durch die Entladungsidentifikationsinformation identifizierte Elektroenergieversorgungsziel zuzulassen, wenn die Position, die durch die Entladungspo6itionsinformation repräsentiert ist, und die Position, die durch die im ersten Speicher (161) gespeicherte Ladungspositionsinformation repräsentiert ist, der Bedingung auf Grundlage der Entladungszulassungsinformation genügen.

3. Ladungs-/Entladungssteuervorrichtung (100) nach Anspruch 1 oder 2, **dadurch gekennzeichnet, dass**
die Elektroenergieversorgungsquelle zumindest eines von einer öffentlichen Einrichtung, einer Wohnung, einer Fabrik, einem Betrieb und einem Fahrzeug umfasst.

4. Ladungs-/Entladungssteuersystem (1), enthaltend eine Sekundärbatterie und eine Ladungs-/Entladungssteuervorrichtung nach einem der vorhergehenden Ansprüche.

5. Ladungs-/Entladungssteuerverfahren, umfassend:
einen ersten Erwerbungsschritt (142) des Erwerbens von einer Elektroenergieversorgungsquelle, die elektrische Energie an eine Sekundärbatterie zuführt, von Ladungsidentifikationsinformation, die die Elektroenergieversorgungsquelle identifiziert;
einen zweiten Erwerbungsschritt (144) des Erwerbens der Menge an elektrischer Energie, die von der Elektroenergieversorgungsquelle an die Sekundärbatterie zugeführt wird;
einen ersten Speicherschritt (147) des Assoziierens und Speicherns in einem ersten Speicher (161) der im ersten Erwerbungsschritt (142) erworbenen Ladungsidentifikationsinformation und der im zweiten Erwerbungsschritt (144) erworbenen elektrischen Energiemenge;
einen dritten Erwerbungsschritt (142) des Erwerbens von einem Elektroenergieversorgungsziel von Entladungsidentifikationsinformation, die das Elektroenergieversorgungsziel identifiziert;
einen Bestimmungsschritt (145) des Bestimmens, ob die elektrische Energie, die von der Elektroenergieversorgungsquelle zugeführt wird, die durch die im ersten Speicher (161) gespeicherte Ladungsidentifikationsinformation identifiziert wird, an das Elektroenergieversorgungsziel, das durch die Entladungsidentifikationsinformation identifiziert wird, entladbar ist auf Grundlage von gespeicherter Entladungszulassungsinformation, die für jede Kombination von einer Elektroenergieversorgungsquelle und einem Elektroenergieversorgungsziel in einem zweiten Speicher (162) gespeichert ist und die repräsentiert, ob die in der Sekundärbatterie gespeicherte elektrische Energie von der Elektroenergieversorgungsquelle an das elektrische Energieversorgungsziel entladbar ist; und
einen Steuerschritt (146) des Steuerns der Entladung von der Sekundärbatterie an das durch die Entladungsidentifikationsinformation identifizierte Elektroenergieversorgungsziel auf Grundlage des Bestimmungsergebnisses im Bestimmungsschritt (145),
wobei, wenn die Entladung im Bestimmungsschritt (145) möglich ist, die elektrische Energiemenge, die mit der Ladungsidentifikationsinformation, die die Elektroenergieversorgungsquelle identifiziert, für die bestimmt wurde, dass sie an das durch die Entladungsidentifikationsinformationen identifizierte Elektroenergieversorgungsziel entladbar ist, assoziiert ist, aus dem ersten Speicher (161) identifiziert wird, und die Entladung an das Elektroenergieversorgungsziel mit der identifizierten Elektroenergiemenge, die als die Obergrenze der entladbaren elektrischen Energiemenge gesetzt ist, im Steuerschritt (146) gesteuert wird.

6. Programm, das es einem Computer ermöglicht, zu funktionieren als:
ein erstes Erwerbungsmittel (142) zum Erwerben von einer Elektroenergieversorgungsquelle, die elektrische Energie an eine Sekundärbatterie zuführt, von Entladungsidentifikationsinformation, die die Elektroenergieversorgungsquelle identifiziert;
ein zweites Erwerbungsmittel (144) zum Erwerben der Menge an von der Elektroenergieversorgungsquelle an die Sekundärbatterie zugeführten elektrischen Energie;
ein erstes Speichermittel (161) zum Speichern der durch das erste Erwerbungsmittel (142) erworbenen Ladungsidentifikationsinformation in Verbindung mit der durch das zweite Erwerbungsmittel (144) erworbenen elektrischen Energiemenge;
ein zweites Speichermittel (162) zum Speichern für jede Kombination aus einer Elektroenergieversorgungsquelle und einem Elektroenergieversorgungsziel von Entladungszulassungsinformation, die repräsentiert, ob die in der Sekundärbatterie gespeicherte Elektroenergie von der Elektroenergieversorgungsquelle an das Elektroenergieversorgungsziel entladbar ist;
ein drittes Erwerbungsmittel (142) zum Erwerben von einem Elektroenergieversorgungsziel von Entladungsidentifikationsinformation, die das Elektroenergieversorgungsziel identifiziert;
ein Bestimmungsmittel (145) zum Bestimmen, ob die elektrische Energie, die von der Elektroenergieversorgungsquelle bereitgestellt wird, die durch die im ersten Speichermittel (161) gespeicherte Ladungsidentifikationsinformation identifiziert wurde, an das durch die Entladungsidentifikationsinformation identifizierte Elektroenergieversorgungsziel entladbar ist auf Grundlage der Entladungszulassungsinformation; und
ein Steuermittel (146) zum Steuern der Entladung von der Sekundärbatterie an das durch die Entladungsidentifikationsinformation identifizierte Elektroenergieversorgungsziel auf Grundlage des Bestimmungsergebnisses durch das Bestimmungsmittel (145),
wobei, wenn das Bestimmungsmittel (145) bestimmt, dass die Entladung möglich ist, das Steuermittel (146) aus dem ersten Speicher (161) die elektrische Energiemenge identifiziert, die mit der Ladungsidentifikationsinformation, die die elektrische Energieversorgungsquelle identifiziert, für die bestimmt wurde, dass sie an das durch die Entladungsidentifikationsinformation identifizierte Elektroenergieversorgungsziel entladbar ist, assoziiert ist, und die Entladung an das Elektroenergieversorgungsziel mit der identifizierten elektrischen Energiemenge, die als die Obergrenze der entladbaren elektrischen Energiemenge gesetzt ist, steuert.

## Revendications

1. Dispositif de commande de charge/décharge (100), comprenant: un premier acquéreur (142) configuré pour acquérir, depuis une source d'alimentation en énergie électrique fournissant de l'énergie électrique à une batterie secondaire, des informations d'identification de charge identifiant la source d'alimentation en énergie électrique ;
un second acquéreur (144) configuré pour acquérir la quantité d'énergie électrique fournie par la source d'alimentation en énergie électrique à la batterie secondaire ; un premier stockage (161) configuré pour stocker les informations d'identification de charge acquises par le premier acquéreur (142) en association avec la quantité d'énergie électrique acquise par le second acquéreur (144) ;
un second stockage (162) configuré pour stocker, pour chaque combinaison d'une source d'alimentation en énergie électrique et d'une destination d'alimentation en énergie électrique, des informations d'autorisation de décharge indiquant si l'énergie électrique stockée dans la batterie secondaire à partir de la source d'alimentation en énergie électrique est déchargeable vers la destination d'alimentation en énergie électrique ;
un troisième acquéreur (142) configuré pour acquérir, depuis une destination d'alimentation en énergie électrique, des informations d'identification de décharge identifiant la destination d'alimentation en énergie électrique ;
un dispositif de détermination (145) configuré pour déterminer si l'énergie électrique fournie par la source d'alimentation en énergie électrique identifiée par les informations d'identification de charge stockées dans le premier stockage (161) est déchargeable vers la destination d'alimentation en énergie électrique identifiée par les informations d'identification de décharge sur la base des informations d'autorisation de décharge ;
et un dispositif de commande (146) configuré pour contrôler la décharge depuis la batterie secondaire vers la destination d'alimentation en énergie électrique identifiée par les informations d'identification de décharge sur la base du résultat de la détermination par le dispositif de détermination (145),
dans lequel le dispositif de commande est configuré de sorte que, lorsque le dispositif de détermination (145) détermine que la décharge est possible, le dispositif de commande (146) identifie, à partir du premier stockage (161), la quantité d'énergie électrique associée aux informations d'identification de charge identifiant la source d'alimentation en énergie électrique déterminée comme étant déchargeable vers la destination d'alimentation en énergie électrique par les informations d'identification de décharge, et contrôle la décharge vers la destination d'alimentation en énergie électrique avec la quantité d'énergie électrique identifiée définie comme la limite supérieure de quantité d'énergie électrique déchargeable.

2. Dispositif de commande de charge/décharge (100) selon la revendication 1, **caractérisé en ce que**
le premier acquéreur (142) est en outre adapté pour acquérir, à partir d'une source d'alimentation en énergie électrique, des informations d'emplacement de charge représentant l'emplacement de la source d'alimentation en énergie électrique,
le premier stockage (161) est configuré pour stocker les informations d'identification de charge et les informations d'emplacement de charge obtenues par le premier acquéreur (142) en association avec la quantité d'énergie électrique obtenue par le second acquéreur (144),
les informations d'autorisation de décharge indiquent que l'énergie électrique stockée dans la batterie secondaire à partir d'une source d'alimentation en énergie électrique est déchargeable vers une destination d'alimentation en énergie électrique lorsque l'emplacement de la source d'alimentation en énergie électrique et l'emplacement de la destination d'alimentation en énergie électrique satisfont une condition prédéterminée,
le troisième acquéreur (142) est en outre adapté pour acquérir, depuis une destination d'alimentation en énergie électrique, des informations d'emplacement de décharge représentant l'emplacement de la destination d'alimentation en énergie électrique, et
le dispositif de détermination (145) est adapté pour permettre la décharge de l'énergie électrique fournie par la source d'alimentation en énergie électrique identifiée par les informations d'identification de charge correspondant aux informations d'emplacement de charge vers la destination d'alimentation en énergie électrique identifiée par les informations d'identification de décharge lorsque l'emplacement représenté par les informations d'emplacement de décharge et l'emplacement représenté par les informations d'emplacement de charge stockées dans le premier stockage (161) satisfont la condition sur la base des informations d'autorisation de décharge.

3. Dispositif de commande de charge/décharge (100) selon la revendication 1 ou 2, **caractérisé en ce que**
la source d'alimentation en énergie électrique comprend au moins l'un d'un établissement public, d'une résidence, d'une usine, d'une entreprise et d'une voiture.

4. Système de commande de charge/décharge (1) comprenant une batterie secondaire et un dispositif de commande de charge/décharge selon l'une quelconque des revendications précédentes.

5. Procédé de commande de charge/décharge, comprenant :
une première étape d'acquisition (142) qui consiste à acquérir, à partir d'une source d'alimentation en énergie électrique fournissant de l'énergie électrique à une batterie secondaire, des informations d'identification de charge identifiant la source d'alimentation en énergie électrique ;
une seconde étape d'acquisition (144) qui consiste à acquérir la quantité d'énergie électrique fournie par la source d'alimentation en énergie électrique à la batterie secondaire ;
une première étape de stockage (147) qui consiste à associer et à stocker dans un premier stockage (161) les informations d'identification de charge obtenues à la première étape d'acquisition (142) et la quantité d'énergie électrique acquise à la seconde étape d'acquisition (144) ;
une troisième étape d'acquisition (142) qui consiste à acquérir, à partir d'une destination de décharge, des informations d'identification de décharge identifiant la destination d'alimentation en énergie électrique ;
une étape de détermination (145) qui consiste à déterminer si l'énergie électrique fournie par la source d'alimentation en énergie électrique identifiée par les informations d'identification de charge stockées dans la premier stockage (161) est déchargeable vers la destination d'alimentation en énergie électrique identifiée par les informations d'identification de décharge sur la base des informations d'autorisation de décharge stockées dans un second stockage (162) pour chaque combinaison d'une source d'alimentation en énergie électrique et d'une destination d'alimentation en énergie électrique et indiquant si l'énergie électrique stockée dans la batterie secondaire à partir de la source d'alimentation en énergie électrique est déchargeable vers la destination d'alimentation en énergie électrique ; et
une étape de contrôle (146) qui consiste à contrôler la décharge depuis la batterie secondaire vers la destination d'alimentation en énergie électrique identifiée par les informations d'identification de décharge sur la base du résultat de détermination de l'étape de détermination (145),
dans lequel, lorsque la décharge est possible à l'étape de détermination (145), la quantité d'énergie électrique associée aux informations d'identification de charge identifiant la source d'alimentation en énergie électrique déterminée comme étant déchargeable vers la destination d'alimentation en énergie électrique identifiée par les informations d'identification de décharge est identifiée à partir du premier stockage (161), et la décharge vers la destination d'alimentation en énergie électrique est contrôlée avec la quantité d'énergie électrique identifiée définie comme la limite supérieure de quantité d'énergie électrique déchargeable à l'étape de contrôle (146).

6. Programme permettant à un ordinateur de fonctionner comme :
un premier moyen d'acquisition (142) destiné à acquérir, à partir d'une source d'alimentation en énergie électrique fournissant de l'énergie électrique à une batterie secondaire, des informations d'identification de charge identifiant la source d'alimentation en énergie électrique ;
un second moyen de stockage (144) destiné à acquérir la quantité d'énergie électrique fournie par la source d'alimentation en énergie électrique à la batterie secondaire ;
un premier moyen de stockage (161) destiné à stocker les informations d'identification de charge acquises par le premier moyen d'acquisition (142) en association avec la quantité d'énergie électrique acquise par le second moyen de stockage (144) ;
un second moyen de stockage (162) destiné à stocker, pour chaque combinaison d'une source d'alimentation en énergie électrique et d'une destination d'alimentation en énergie électrique, des informations d'autorisation de décharge indiquant si l'énergie électrique stockée dans la batterie secondaire à partir de la source d'alimentation en énergie électrique est déchargeable vers la destination d'alimentation en énergie électrique ;
un troisième moyen d'acquisition (142) destiné à acquérir, à partir d'une destination d'alimentation en énergie électrique, des informations d'identification de décharge identifiant la destination d'alimentation en énergie électrique ;
un moyen de détermination (145) destiné à déterminer si l'énergie électrique fournie par la source d'alimentation en énergie électrique identifiée par les informations d'identification de charge stockées dans le premier moyen de stockage (161) est déchargeable vers la destination d'alimentation en énergie électrique identifiée par les informations d'identification de décharge sur la base des informations d'autorisation de décharge ; et
un moyen de contrôle (146) destiné à contrôler la décharge à partir de la batterie secondaire vers la destination d'alimentation en énergie électrique identifiée par les informations d'identification de décharge sur la base du résultat de détermination par le moyen de détermination (145),
dans lequel, lorsque le moyen de détermination (145) détermine que la décharge est possible, le moyen de contrôle (146) identifie, à partir du premier stockage (161), la quantité d'énergie électrique associée aux informations d'identification de charge identifiant la source d'alimentation en énergie électrique déterminée comme étant déchargeable vers la destination d'alimentation en énergie électrique identifiée par les informations d'identification de décharge, et contrôle la décharge vers la destination d'alimentation en énergie électrique avec la quantité d'énergie électrique identifiée définie comme la limite supérieure de quantité d'énergie électrique déchargeable.
